# EUROPEAN PATENT APPLICATION

(11) **EP 2 999 217 A1**
(43) Date of publication of application: **23.03.2016**
(21) Application number: 15185909.7
(22) Date of filing: 18.09.2015
(51) Int. Cl.: H04N 7/18, G08B 13/196

(54) **IMAGE PROCESSING APPARATUS, IMAGE PROCESSING METHOD, IMAGE PROCESSING SYSTEM, AND PROGRAM**

(30) Priority: 19.09.2014 JP 2014191416
(71) Applicant: CANON KABUSHIKI KAISHA, Ohta-ku Tokyo 146-8501 (JP)
(72) Inventor: ITO, Kan, Ohta-ku, Tokyo (JP)
(74) Representative: Northway, Daniel Robert

(57) **Abstract**

An image processing apparatus includes a detection unit configured to detect movement information for specifying a movement direction of a specific moving object detected from an image obtained by at least one of a plurality of image capturing units, a prediction unit configured to predict a second image capturing unit configured to image-capture the specific moving object subsequently to a first image capturing unit based on the movement information detected by the detection unit and information representing an image capturing range of each of the plurality of image capturing units, and a display control unit configured to perform display for specifying a prediction result by the prediction unit before the second image capturing unit image-captures the specific moving object.

## Description

### BACKGROUND OF THE INVENTION

### Field of the Invention

The present invention relates to an image processing apparatus that processes images respectively captured by a plurality of image capturing units, an image processing method, an image processing system, and a program.

### Description of the Related Art

In a field of a monitoring camera system, there has been a technique for detecting a subject in an image using an image analysis technique. Further, a technique for adding a label to a moving object in the detected subject and for always following the moving object has been known as a moving object tracking technique.

In recent years, a technique for tracking a monitoring target over a wide area using a plurality of monitoring cameras has also been considered.

Generally, if movement of a specific monitor target is monitored using respective images from the plurality of monitoring cameras, the images from the plurality of monitoring cameras are displayed on a monitor in a security guardroom, and a monitoring person tracks the monitor target by the images. A method for displaying the images from the plurality of monitoring cameras includes a method for respectively displaying the images on a plurality of monitors and a method for dividing one screen into screens to display a plurality of images on the screens. The monitoring person visually selects, among the images displayed using the methods, an image to be paid attention, and monitors the monitor target.

However, if a monitoring target range extends over a wide area, the number of monitoring cameras to be installed becomes large so that the number of images that can be checked at one time by the monitoring person is limited. Therefore, it becomes difficult for the monitoring person to continue to track an image, in which the monitor target is captured, on a screen.

A monitoring system for reducing a tracking loss of the monitor target includes a technique discussed in Japanese Patent Application Laid-Open No. 2009-17416. This technique is used, in an environment where a plurality of monitoring cameras is arranged in a monitoring target range, for displaying images from one or more cameras adjacent to a camera (adjacent cameras) being image-capturing a monitor target, when it is detected that the monitor target has entered the environment. For each of the adjacent cameras, the time when the monitor target is estimated to reach the adjacent camera is calculated, and the calculated estimated reach time is displayed together with the image from the adjacent camera.

In the technique discussed in Japanese Patent Application Laid-Open No. 2009-17416, the image from the camera adjacent to the camera being image-capturing the monitor target at the current time point is only displayed together with the estimated reach time. Thus, a monitoring person is to predict which of the cameras then is to image-capture the monitor target based on the displayed estimated reach time. Therefore, the larger the number of the adjacent cameras becomes, the longer the prediction by the monitoring person takes, and the more difficult the monitor target becomes to be monitored.

### SUMMARY OF THE INVENTION

According to a first aspect of the present invention, there is provided an image processing apparatus as specified in claims 1 to 9. According to a second aspect of the present invention, there is provided an image processing method as specified in claims 10 to 12. According to a third aspect of the present invention, there is provided an image processing system as specified in claim 13. A fourth aspect of the present invention, there is provided a program as specified in claims 14 to 16.

Further features of the present invention will become apparent from the following description of exemplary embodiments with reference to the attached drawings.

### BRIEF DESCRIPTION OF THE DRAWINGS

Fig. 1 is a network connection configuration diagram illustrating an example of an image processing system according to a present exemplary embodiment.
Fig. 2 illustrates an example of a hardware configuration of a network camera.
Fig. 3 illustrates an example of a hardware configuration of an image display apparatus.
Fig. 4 is a functional block diagram of a network camera and an image display apparatus.
Fig. 5 is a flowchart illustrating a procedure for image capturing processing.
Fig. 6 is a flowchart illustrating a procedure for image display processing.
Fig. 7 illustrates an example of respective installation positions and image capturing ranges of cameras and a movement of a monitor target.
Fig. 8 illustrates an example of a display screen of an image captured by a camera.
Fig. 9 illustrates a movement within a screen of a monitor target.
Fig. 10 illustrates a position where a monitor target is predicted to appear.
Fig. 11 illustrates an example of display of an appearance prediction image.
Fig. 12 is a functional block diagram of a network camera according to a second exemplary embodiment.
Fig. 13 illustrates an example of respective installation positions and image capturing ranges of cameras and a movement of a monitor target.
Fig. 14 illustrates an example of display of an appearance prediction image.

### DESCRIPTION OF THE EMBODIMENTS

Exemplary embodiments for implementing the present invention will be described below with reference to the accompanying drawings.

Exemplary embodiments described below are examples of means for implementing the present invention, and are to be corrected or altered, as needed, according to a configuration of an apparatus to which the present invention is applied and various conditions. The present invention is not to be limited to exemplary embodiments described below.

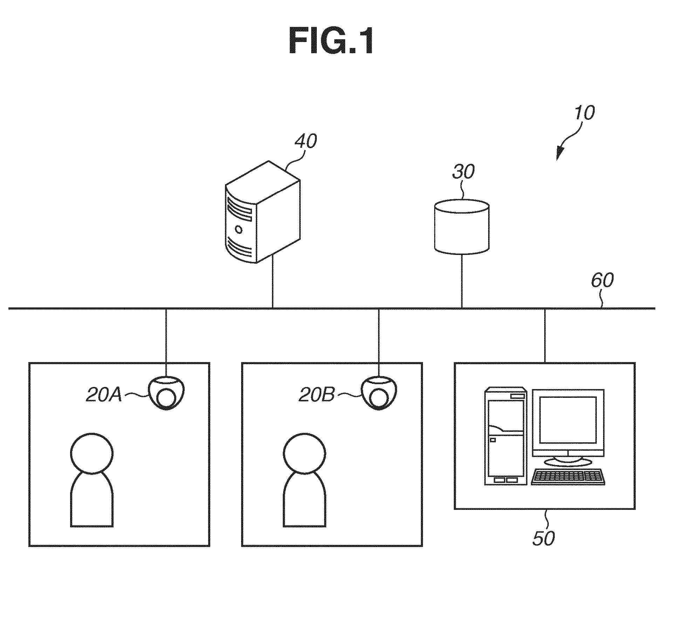

Fig. 1 is a network connection configuration diagram illustrating an example of an operation environment of an image processing system according to the present exemplary embodiment. In the present exemplary embodiment, the image processing system is applied to a network camera system.

A network camera system 10 includes a plurality of network cameras (hereinafter merely referred to as "cameras") 20A and 20B, a storage apparatus 30, a management server apparatus 40, and an image display apparatus 50. The cameras 20A and 20B, the storage apparatus 30, the management server apparatus 40, and the image display apparatus 50 are connected to one another via a local area network (LAN) 60 serving as a network line. The network line is not limited to the LAN. The network line may be the Internet or a wide area network (WAN).

The cameras 20A and 20B are respectively image capturing apparatuses, and are dispersedly arranged in a predetermined monitoring target range (monitoring target space). An image capturing range of the camera 20A and an image capturing range of the camera 20B at least partly differ from each other. More specifically, the cameras 20A and 20B may have their respective different image capturing ranges, or both the image capturing ranges may partly overlap each other.

Each of the cameras 20A and 20B has a function of image-capturing a subject while simultaneously collating the captured image with person collation data managed by the management server apparatus 40 to detect a specific person (monitor target) and performing processing for tracking the monitor target. Each of the cameras 20A and 20B transmits an image data file including image data representing the captured image and image analysis data after image analysis processing to the storage apparatus 30 via the LAN 60.

The storage apparatus 30 is a recording apparatus, and includes a writing area into which the image data file transmitted from each of the cameras 20A and 20B is written.

The management server apparatus 40 collects the image data file recorded in the storage apparatus 30. The management server apparatus 40 manages image information over the entire monitoring target range using the collected image data file (current image data and image analysis data, and past image data and image analysis data).

Further, the management server apparatus 40 manages the person collation data. The person collation data is data that associates a person identifier (ID) for specifying the monitor target with information (an image and a feature amount) for specifying the monitor target such as a face, clothes, and a gait. The management server apparatus 40 transmits the person collation data to the cameras 20A and 20B via the LAN 60 in response to respective data transmission requests from the cameras 20A and 20B.

The image display apparatus 50 includes a personal computer (PC), for example, and controls display of images from the cameras 20A and 20B. The image display apparatus 50 has a multi-screen display function for split-displaying a plurality of images respectively captured by each of the cameras 20A and 20B in one screen. The image display apparatus 50 has a function of displaying a tracking image of the monitor target and a function of highlighting (explicitly indicating) an image from a camera, which is predicted to subsequently image-capture the monitor target (an appearance prediction image), prior to actually image-capturing the monitor target with the camera.

Further, the image display apparatus 50 also functions as an input unit for performing an operation for searching for an image such as an event scene.

A physical connection format of the image display apparatus 50 with the LAN 60 is not limited to a wired connection, but may be a wireless connection such as a tablet terminal. More specifically, the connection format need not be physical if the image display apparatus 50 is connected to the LAN 60 in a protocol manner.

In the system illustrated in Fig. 1, the camera serving as the image capturing apparatus may include two or more cameras. The number of cameras may be any number that is two or more. Further, the respective numbers of storage apparatuses 30, management server apparatuses 40, and image display apparatuses 50 to be connected to the LAN 60 are not limited to the numbers illustrated in Fig. 1, but may be large numbers if the storage apparatuses 30, the management server apparatuses 40, and the image display apparatuses 50 can be identified by addresses or the like.

The moving object serving as a monitoring target is not limited to a person, but may be any moving object such as a vehicle.

A specific configuration of the cameras 20A and 20B and the image display apparatus 50 will be described.

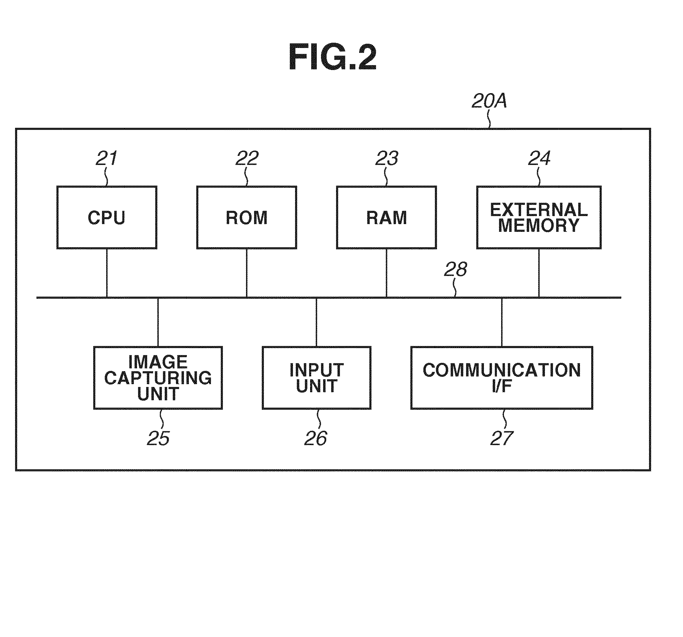

Fig. 2 illustrates an example of a hardware configuration of the cameras 20A and 20B. The cameras 20A and 20B have the same hardware configuration, and hence only the camera 20A will be described below.

The camera 20A includes a central processing unit (CPU) 21, a read-only memory (ROM) 22, a random access memory (RAM) 23, an external memory 24, an image capturing unit 25, an input unit 26, a communication interface (I/F) 27, and a system bus 28.

The CPU 21 integrally controls an operation in the camera 20A, and controls the components 22 to 27 via the system bus 28.

The ROM 22 is a non-volatile memory that stores a control program required for the CPU 21 to perform processing. The program may be stored in the external memory 24 or a detachable storage medium (not illustrated).

The RAM 23 functions as a main memory or a work area of the CPU 21. More specifically, the CPU 21 loads a required program into the RAM 23 from the ROM 22 in performing processing, and executes the program to implement various types of functional operations.

The external memory 24 stores various types of data and various types of information required when the CPU 21 performs the processing using the program, for example. The external memory 24 stores various types of data and various types of information obtained when the CPU 21 performs the processing using the program, for example.

The image capturing unit 25 is used to image-capture a subject, and includes a complementary metal oxide semiconductor (CMOS) and a charge coupled device (CCD).

The input unit 26 includes a power supply button. A user of the camera 20A can issue an instruction to the camera 20A via the input unit 26.

The communication I/F 27 is an interface for communicating with an external apparatus (the storage apparatus 30 and the management server apparatus 40). The communication I/F 27 is a LAN interface, for example.

The system bus 28 communicably connects the CPU 21, the ROM 22, the RAM 23, the external memory 24, the image capturing unit 25, the input unit 26, and the communication I/F 27.

More specifically, the CPU 21 executes the program stored in the ROM 22 to implement the above described image capturing processing and tracking processing.

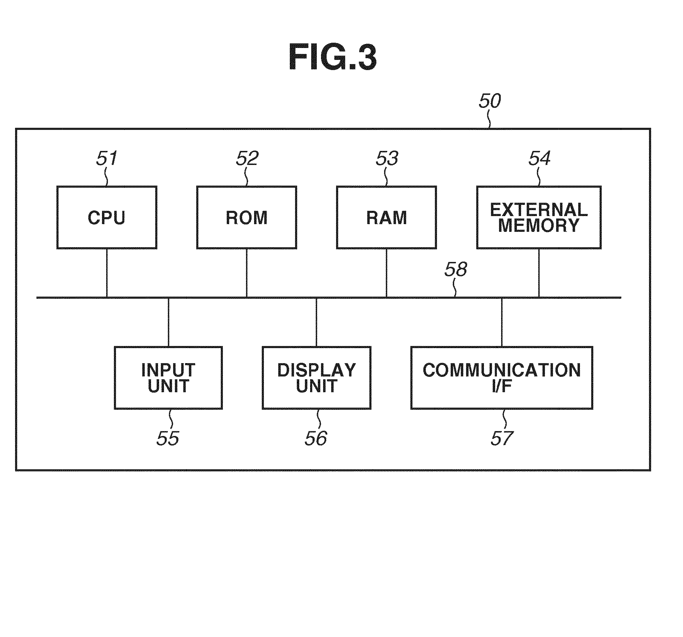

Fig. 3 illustrates an example of a hardware configuration of the image display apparatus 50.

The image display apparatus 50 includes a CPU 51, a ROM 52, a RAM 53, an external memory 54, an input unit 55, a display unit 56, a communication interface (I/F) 57, and a system bus 58.

The CPU 51 integrally controls an operation in the image display apparatus 50, and controls the components 52 to 57 via the system bus 58.

The ROM 52 is a non-volatile memory that stores a control program required for the CPU 51 to perform processing. The program may be stored in the external memory 54 or a detachable storage medium (not illustrated).

The RAM 53 functions as a main memory or a work area of the CPU 51. More specifically, the CPU 51 loads a required program into the RAM 53 from the ROM 52 in performing processing, and executes the program to implement various types of functional operations.

The external memory 54 stores various types of data and various types of information required when the CPU 51 performs the processing using the program, for example. The external memory 54 stores various types of data and various types of information obtained when the CPU 51 performs the processing using the program, for example.

The input unit 55 includes a pointing device such as a keyboard or a mouse. A user of the image display apparatus 50 can issue an instruction to the image display apparatus 50 via the input unit 55.

The display unit 56 includes a monitor such as a liquid crystal display (LCD).

The communication I/F 57 is an interface for communicating with an external apparatus (the storage apparatus 30 and the management server apparatus 40). The communication I/F 57 is a LAN interface, for example.

The system bus 58 communicably connects the CPU 51, the ROM 52, the RAM 53, the external memory 54, the input unit 55, the display unit 56, and the communication I/F 57.

More specifically, the CPU 51 executes the program stored in the ROM 52 to implement display control processing for the above described tracking image and appearance prediction image.

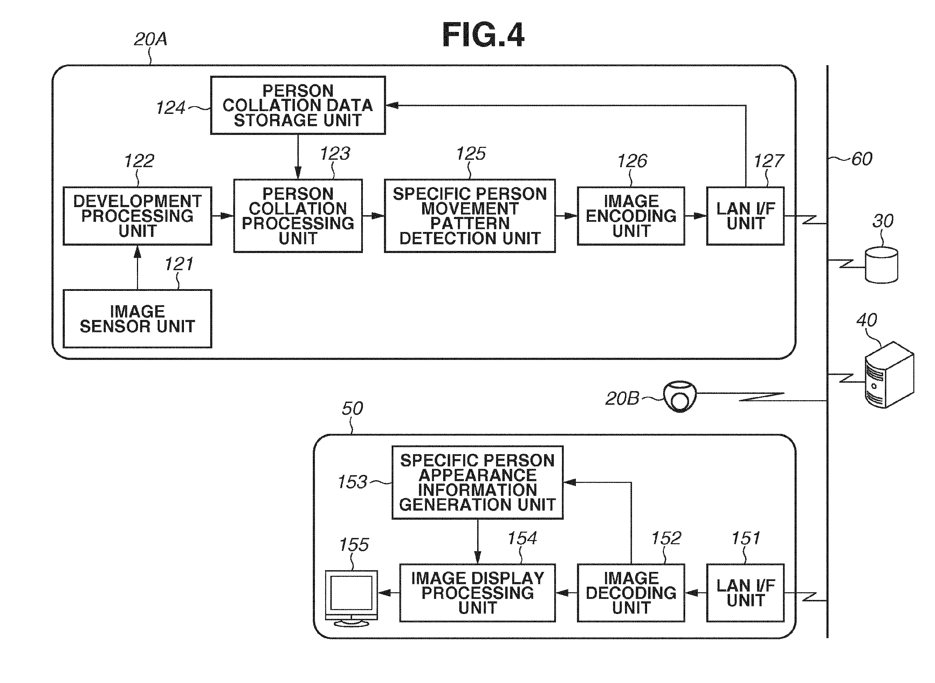

Fig. 4 is a functional block diagram of the cameras 20A and 20B and the image display apparatus 50. The cameras 20A and 20B have the same function, and hence only the camera 20A is illustrated as a block diagram in Fig. 4.

The camera 20A includes an image sensor unit 121, a development processing unit 122, a person collation processing unit 123, a person collation data storage unit 124, a specific person movement pattern detection unit 125, an image encoding unit 126, and a LAN I/F 127.

The image sensor unit 121 photoelectrically converts a light image formed on an image capturing surface of the image capturing unit 25 into a digital electric signal, and outputs the digital electric signal to the development processing unit 122.

The development processing unit 122 performs predetermined pixel interpolation or color conversion processing for the digital electric signal obtained by the photoelectric conversion by the image sensor unit 121, to generate a digital image with a Red-Green-Blue (RGB) or YUV color model. The development processing unit 122 performs predetermined calculation processing using the digital image, which has been subjected to development, and performs image processing such as white balance, sharpness, contrast, and color conversion based on an obtained calculation result.

The person collation processing unit 123 performs processing for detecting a specific person (a monitor target) from image data output from the development processing unit 122. More specifically, the person collation processing unit 123 performs image analysis processing such as moving object detection, human body detection, and object detection for the image data, to detect a subject. Collation processing for collating the detected subject with person collation data acquired from the person collation data storage unit 124 to be described below is performed. The person collation processing unit 123 detects the subject, which has been collated at this time, as a monitor target.

The person collation processing unit 123 assigns a specific ID to one person, who has been identified from a positional relationship between frames, of collated persons, and performs processing for tracking the person. The person collation processing unit 123 outputs a processing result to the specific person movement pattern detection unit 125 as image analysis data.

The person collation data storage unit 124 can write, read out, and erase the person collation data to or from a non-volatile memory. The person collation data written by the person collation data storage unit 124 is person collation data managed by the management server apparatus 40. More specifically, the person collation data storage unit 124 acquires the person collation data transmitted from the management server apparatus 40 using the LAN I/F 127 to be described below, and writes the acquired person collation data into the memory.

The specific person movement pattern detection unit 125 detects a movement pattern of the monitor target that has been collated and tracked by the person collation processing unit 123. The movement pattern means movement information for specifying at least a direction in which the monitor target is to advance, and the movement pattern is detected by a combination of a movement direction, a movement locus, and a movement speed of the monitor target in a frame for a predetermined period.

For example, it is possible to previously set from which position and to which position on an image screen movement associated with movement in any direction is performed depending on an image capturing viewing angle of the camera. In this case, a direction in which the monitor target is advancing, a locus along which the monitor target moves, and a speed at which the monitor target moves are combined, respectively, as an azimuth angle, locus coordinates, and a movement distance between frames, to generate movement pattern data. In the present exemplary embodiment, the movement direction of the monitor target is information specified by a movement direction of the monitor target in a first period, and the movement locus is information specified by a movement direction of the monitor target in a second period longer than the first period. The specific person movement detection unit 125 outputs the detected movement pattern data to the image encoding unit 126.

The specific person movement pattern detection unit 125 may detect the movement pattern using at least one of the movement direction and the movement locus of the monitor target because at least a direction in which the monitor target is to advance may be found.

The image encoding unit 126 subjects a digital image signal (image data and image analysis data) input via the development processing unit 122, the person collation processing unit 123, and the specific person movement pattern detection unit 125 to compression and frame rate setting for transmission, and encodes the display image signal. A compression method for transmission is based on a standard such as Moving Picture Experts Group phase 4 (MPEG 4), H. 264, Motion-JPEG (MJPEG), or Joint Photographic Experts Group (JPEG).

The image encoding unit 126 superimposes the movement pattern data of the monitor target input from the specific person movement pattern detection unit 125 on image encoding data as metadata, and further files image data in an mp4 format or a mov format.

The LAN I/F 127 controls the communication I/F 27, to control communication with the management server 40. The LAN I/F 127 receives the person collation data transmitted from the management server apparatus 40, and transmits the received person collation data to the person collation data storage unit 124.

The LAN I/F 127 cooperates with a LAN I/F (not illustrated) in the storage apparatus 30 to construct a file system such as a Network File System (NFS) or a Common Internet File System (CIFS) and to record an image data file encoded by the image encoding unit 126.

The image display apparatus 50 includes a LAN I/F 151, an image decoding unit 152, a specific person appearance information generation unit 153, an image display processing unit 154, and a display 155.

The LAN I/F 151 has a similar function to that of the LAN I/F 127 in the camera 20A. The LAN I/F 151 receives various types of management information transmitted from the management server apparatus 40, and receives an image data file from each of the cameras, which has been stored in the storage apparatus 30.

The image decoding unit 152 expands and decodes the image data file, which has been received by the LAN I/F unit 151, and separates the expanded and decoded image data file into a digital image signal and movement pattern data, which has been superimposed as metadata, of the monitor target. The image decoding unit 152 outputs the digital image signal and the movement pattern data of the monitor target, which have been obtained by the separation, respectively, to the image display processing unit 154 and the specific person appearance information generation unit 153.

The specific person appearance generation unit 153 generates specific person appearance information based on the movement pattern data of the monitor target that has been input from the image decoding unit 152. The specific person appearance information includes information indicating toward which camera (image capturing range) the monitor target is advancing (information about the camera subsequently to image-capture the monitor target) and information indicating in what part on an image screen of the camera, which is to subsequently image-capture the monitor target, the monitor target is to appear.

More specifically, the specific person appearance information generation unit 153 refers to map information about a monitoring target range (hereinafter also referred to as a camera map) previously stored and camera information such as an installation position (installation coordinates), an image capturing direction, an image capturing range, and an image capturing viewing angle of each of the cameras previously stored, and generates specific person appearance information based on the movement pattern data of the monitor target. More specifically, the specific person appearance information generation unit 153 sets a direction of each of the cameras installed adjacent to an image screen of the camera based on the camera map and the camera information. The specific person appearance information generation unit 153 finds out toward which camera the monitor target is advancing and in which part on an image screen of that camera the monitor target appears, based on such setting information and the movement pattern data of the monitor target.

An image display processing unit 154 controls screen display of the display 155 constituting the display unit 56 using the digital image signal input from the image decoding unit 152 and the specific person appearance information input from the specific person appearance information generation unit 153. The image display processing unit 154 displays images in a multi-screen, displays a tracking image, and highlights an appearance prediction image, as described above.

Thus, in the present exemplary embodiment, the movement pattern of the monitor target is detected from the image captured by one of the cameras, and a camera on which the monitor target is then to be reflected is predicted depending on the movement pattern. The image display apparatus 50 according to the present exemplary embodiment performs display for specifying the predicted result before the camera on which the monitor target is to be then reflected image-captures the monitor target. The display for specifying the predicted result highlights an image captured by the predicted camera (an appearance prediction image). The method for the highlighting includes methods for enlarging the appearance prediction image, and for flashing or blinking, highlighting, or explicitly indicating by an arrow a frame of the appearance prediction image. The highlighting is not limited to the above described methods. Display for specifying the predicted result is not limited to the highlighting. If an image captured by the predicted camera is not displayed on the display 155, for example, display of the image captured by the predicted camera on the display 155 depending on a prediction result is also included in the display for specifying the predicted result.

Further, the image display processing unit 154 superimposes, when displaying the appearance prediction image, a range in which the monitor target is predicted to appear (an appearance prediction range) on the appearance prediction image. A shape of the appearance prediction range may be any shape, e.g., a rectangular shape or a circular shape. A method for displaying the appearance prediction range can include any method as far as the appearance prediction range is viewable. For example, the frame of the appearance prediction range may be displayed, or the hue of the appearance prediction range may be changed.

While a case where an image from a camera, which is then to image-capture a monitor target, is highlighted to highlight a specific captured image depending on an appearance prediction result of the monitor target has been described above, a method other than the image display may be used. For example, a user may be informed which of the cameras is then to image-capture the monitor target with a voice, or a lamp for specifying a camera, which is predicted to then capture the monitor target, may be blinked.

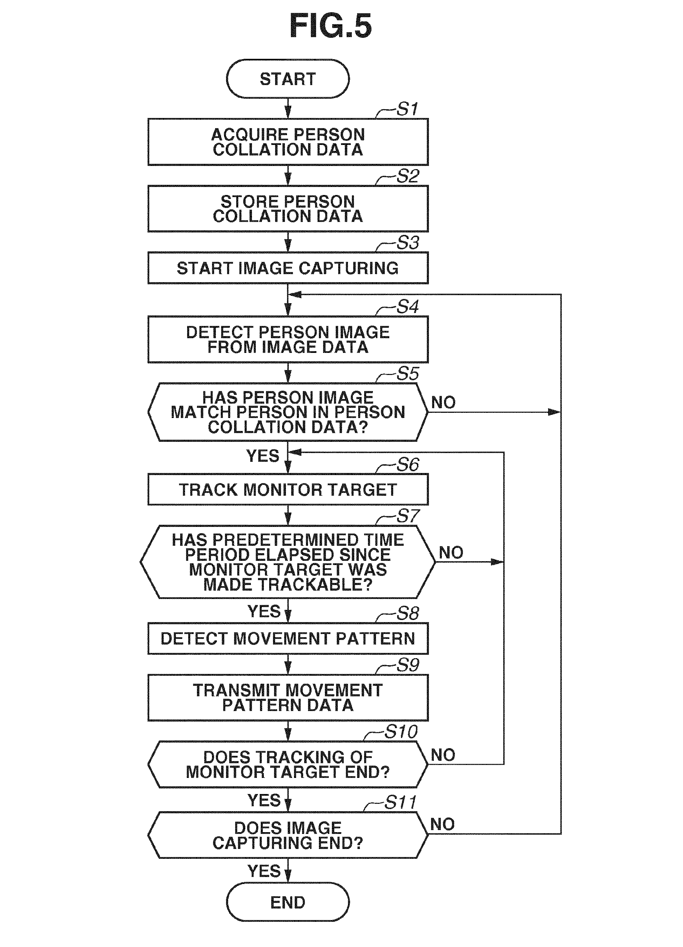

Fig. 5 is a flowchart illustrating a procedure for image capturing processing performed by the camera 20A. The processing illustrated in Fig. 5 is implemented when the CPU 21 illustrated in Fig. 2 executes a program required to perform processing corresponding to the flowchart illustrated in Fig. 5. In the present exemplary embodiment, the processing illustrated in Fig. 5 starts at a timing when an image capturing start instruction is input to the camera 20A from a user. The timing when the processing illustrated in Fig. 5 starts is not limited to the above described timing. Also in the camera 20B, the same processing as the image capturing processing illustrated in Fig. 5 is performed.

In step S1, the camera 20A first acquires person collation data managed by the management server apparatus 40. More specifically, the camera 20A transmits a person collation data transmission request to the management server apparatus 40, and receives the person collation data that has been transmitted by the management server apparatus 40 upon receiving the person collation data transmission request.

In step S2, the camera 20A stores the person collation data, which has been acquired in step S1, in a predetermined storage area (e.g., a memory), and the processing proceeds to step S3.

In step S3, the camera 20A starts image capturing by the image capturing unit 25, and the processing proceeds to step S4. In step S3, the camera 20A subjects a digital electric signal obtained from the image sensor unit 121 to predetermined development processing, and starts processing for generating image data.

In step S4, the camera 20A detects a person image from an image, which has been captured by the image capturing unit 25 and subjected to the development processing, and the processing proceeds to step S5.

In step S5, the camera 20A collates the person image, which has been detected in step S4, with the person collation data stored in the person collation data storage unit 125. If the captured person image and a person in the person collation data have not matched each other as a result of the collation (NO in step S5), the camera 20A determines that a monitor target has not been captured, and the processing returns to step S4. More specifically, the camera 20A encodes the image data used for the collation and image analysis data indicating that the monitor target after the collation processing has not been detected, and transmits an image data file including the encoded image data and image analysis data to the storage apparatus 30.

If the captured person image and the person in the person collation data have matched each other as a result of the collation (YES in step S5), the camera 20A determines that the monitor target has been captured, and the processing proceeds to step S6.

In step S6, the camera 20A performs processing for tracking the monitor target. More specifically, the camera 20A assigns an ID serving as an identifier to the monitor target to track the monitor target.

In step S7, the camera 20A determines whether a previously set predetermined time period has elapsed since the monitor target was made trackable. The predetermined time period is set to a time period during which a movement pattern of the monitor target can be detected. If the predetermined time period has not elapsed (NO in step S7), the processing returns to step S6. In step S6, the camera 20A continues to track the monitor target until the predetermined time period elapses. During the time period, the camera 20A encodes the image data and the image analysis data after the tracking processing, and transmits the image data file including the encoded image data and image analysis data to the storage apparatus 30.

If the camera 20A determines that the predetermined time period has elapsed (YES in step S7), the processing proceeds to step S8. In step S8, the camera 20A detects a movement pattern of the monitor target, and generates movement pattern data.

In step S9, the camera 20A then transmits the movement pattern data, which has been generated in step S8, to the storage apparatus 30. More specifically, in step S9, the camera 20A transmits an image data file, which has been obtained by superimposing the movement pattern data as metadata on the image data file including the encoded image data and image analysis data after the tracking processing, to the storage apparatus 30.

In step S10, the camera 20A determines whether the tracking of the monitor target ends. If the camera 20A determines that the monitor target has disappeared from the image, the camera 20A determines that the tracking of the monitor target ends. If the monitor target has not disappeared from the image, and the tracking of the monitor target continues (NO in step S10), the processing returns to step S6. If the tracking of the monitor target ends (YES in step S10), the processing proceeds to step S11.

In step S11, the camera 20A determines whether the image capturing by the image capturing unit ends. If a request to stop transmitting the captured image has been received from the management server apparatus 40, for example, the camera 20A determines that the image capturing ends (YES in step S11), and the processing ends. On the other hand, if the camera 20A determines that the image capturing continues (NO in step S11), the processing returns to step S4.

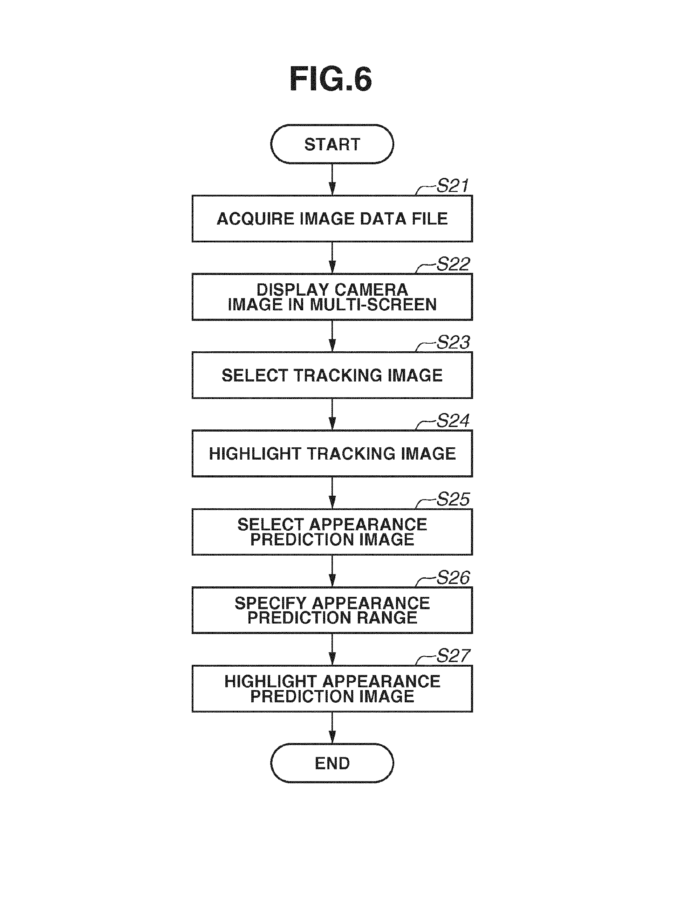

Fig. 6 is a flowchart illustrating a procedure for image display processing performed by the image display apparatus 50. The processing illustrated in Fig. 6 is implemented when the CPU 51 illustrated in Fig. 3 reads out and executes a program required to perform the processing corresponding to the flowchart illustrated in Fig. 6. In the present exemplary embodiment, the processing illustrated in Fig. 6 is repeatedly performed for each predetermined time period after an image capturing start instruction is input to the camera 20A from the user. However, a timing when the processing illustrated in Fig. 6 is performed is not limited to the above described timing.

In step S21, the image display apparatus 50 acquires respective image data files from all cameras installed in a monitoring target range from the storage apparatus 30, and the processing proceeds to step S22.

In step S22, the image display apparatus 50 decodes each of the image data files, which have been acquired in step S21, and displays images from the respective cameras in a multi-screen based on image data of the cameras included in the image data files.

In step S23, the image display apparatus 50 selects, among images from each of the cameras, an image obtained by image-capturing the monitor target (a tracking image) based on image analysis data included in the image data files from the cameras, and the processing proceeds to step S24.

In step S24, the image display apparatus 50 highlights the tracking image that has been selected in step S23. For example, the image display apparatus 50 superimposes image data representing the image obtained by capturing the monitor target and the image analysis data after the tracking processing of the image data to enlarge the superimposed data on a display.

In step S25, the image display apparatus 50 analyses movement pattern data included in each of the image data files, and selects, among the images from each of the cameras, an image from the camera that is then to image-capture the monitor target (an appearance prediction image).

In step S26, the image display apparatus 50 analyses the movement pattern data included in each of the image data files, and specifies a range in which the monitor target is predicted to appear (an appearance prediction range) on a display screen of the appearance prediction image, which has been selected in step S25, and the processing proceeds to step S27.

In step S27, the image display apparatus 50 highlights (e.g., enlarges) the appearance prediction image, which has been selected in step S25, on the display, and the image display processing ends. At this time, the image display apparatus 50 superimposes the appearance prediction range, which has been specified in step S26, on the appearance prediction image when displaying the appearance prediction image.

In Fig. 5, the processing in step S1 corresponds to processing of the LAN I/F 127, the processing in step S2 corresponds to processing of the person collation data storage unit 124, and the processing in step S3 corresponds to processing of the image sensor unit 121 and the development processing unit 122. Further, the processing in steps S4 to S6 corresponds to processing of the person collation processing unit 123, and the processing in steps S7 and S8 corresponds to processing of the specific person movement pattern detection unit 125. Furthermore, the processing in step S9 corresponds to processing of the image encoding unit 126.

In Fig. 6, the processing in step S21 corresponds to processing of the LAN I/F 151 and the image decoding unit 152, the processing in steps S22 to S24 corresponds to processing of the image display processing unit 154. Further, the processing in steps S25 to S26 corresponds to processing of the specific person appearance information generation unit 153, and the processing in step S27 corresponds to processing of the image display processing unit 154.

Moreover, in the foregoing, the person collation processing unit 123 corresponds to a specific moving object detection unit, and the specific person movement pattern detection unit 125 corresponds to a movement information detection unit. The specific person appearance information generation unit 153 corresponds to a prediction unit, and the image display processing unit 154 corresponds to a display control unit. Further, the means for the processing in step S22 illustrated in Fig. 6 corresponds to a multi-screen display unit, and the means for the processing in step S26 corresponds to an appearance prediction range specifying unit.

An operation according to the first exemplary embodiment will be described below.

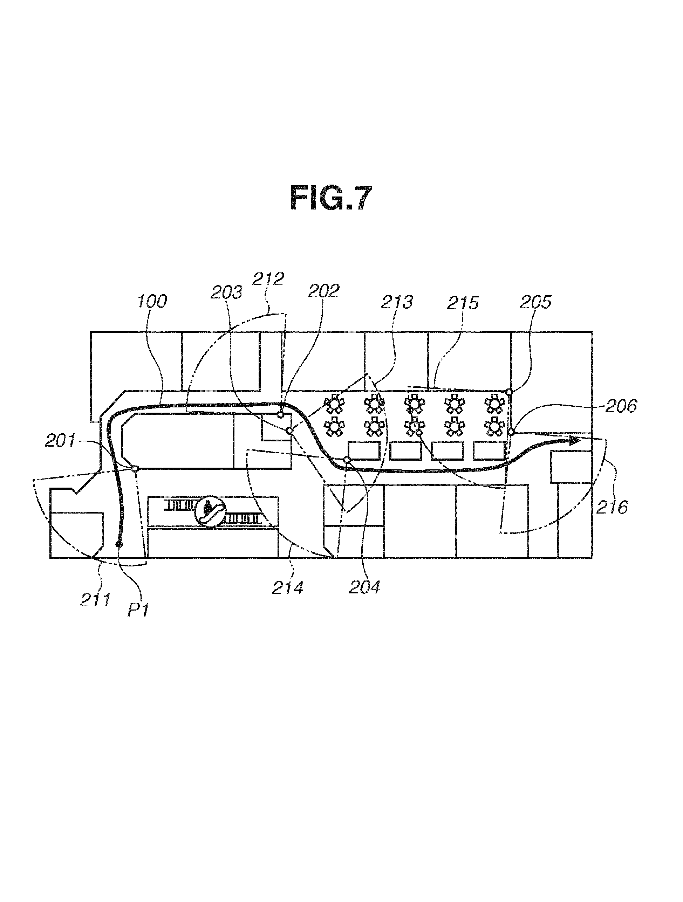

As illustrated in Fig. 7, an operation in an environment where six cameras 201 to 206 are dispersedly arranged in a monitoring target range will be described below. The cameras 201 to 206 have a similar configuration to that of the above described cameras 20A and 20B. In Fig. 7, the camera 201 image-captures a subject within its image capturing range 211, and the camera 202 image-captures a subject within its image capturing range 212. The same is true for the cameras 202 to 206.

First, when the network camera system 10 starts to be operated, each of the cameras 201 to 206 starts image capturing processing illustrated in Fig. 5. Next, in step S1, each of the cameras 201 to 206 acquires person collation data including collation data of a person P1 serving as a monitor target from the management server apparatus 40. In step S2, each of the cameras 201 to 206 stores the person collation data in a memory. In step S3, the cameras 201 to 206 respectively start image capturing in the capturing ranges 211 to 216. Then, in steps S4 and S5, each of the cameras 201 to 206 analyzes image data representing the captured image, and determines whether the monitor target has been image-captured.

If the person P1 serving as the monitor target passes along a movement locus indicated by an arrow 100 within the monitor target range illustrated in Fig. 7, the camera 201 first image-captures the monitor target P1. More specifically, if the camera 201 determines that a person, who has been image-captured by itself, is the monitor target P1 that matches the person collation data as a result of person collation processing (YES in step S5), then in step S6, the camera 201 tracks the monitor target P1. If the camera 201 determines that a predetermined time period has not elapsed from the time point where the monitor target P1 was made trackable (NO in step S7), the camera 201 transmits image analysis data after the tracking processing, together with the image data, to the storage apparatus 30.

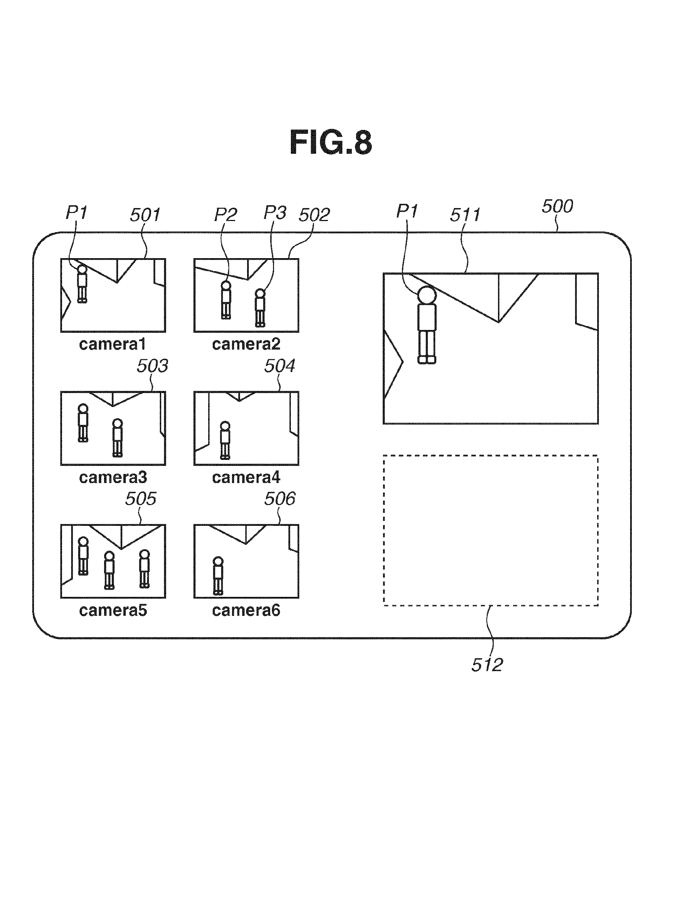

At this time, in step S21, the image display apparatus 50 acquires an image data file stored in the storage apparatus 30. In step S22, the image display apparatus 50 displays images, which have been captured by each of the cameras 201 to 206, in a multi-screen. In step S24, the image display apparatus 50 also displays a tracking image of the monitor target P1 from the camera 201 to be enlarged on the screen. An example of an output screen of the display 155 in the image display apparatus 50 at this time is illustrated in Fig. 8.

In Fig. 8, areas 501, 502, ..., and 506 in an output screen 500 are areas where images captured by the camera 201 (camera 1), the camera 202 (camera 2), ..., and the camera 206 (camera 6), respectively. An area 511 is an area where the tracking image of the monitor target P1 is displayed. At this time point, the image captured by the camera 201 is displayed in the area 511.

Further, an area 512 is an area where an appearance prediction image of the monitor target P1 is displayed. If the camera 201 determines that the predetermined time period has not elapsed from the time point where the monitor target P1 was made trackable (NO in step S7), the camera 201 cannot detect a movement pattern of the monitor target P1. Therefore, nothing is displayed in the area 512 in the output screen 500 for this period.

In step S8, the camera 201 detects the movement pattern of the monitor target P1 when the predetermined time period has elapsed from the time point where the monitor target P1 was made trackable. In step S9, the camera 201 transmits movement pattern data representing the detected movement pattern, together with the image data, to the storage apparatus 30.

At this time, the image display apparatus 50 acquires the image data file stored in the storage apparatus 30 to acquire the movement pattern data that has been transmitted by the camera 201. The image display apparatus 50 selects an image captured by the camera installed in a movement direction of the monitor target P1 based on the acquired movement pattern data from the camera 201. The monitor target P1 advances toward the camera 202, as illustrated in Fig. 7. Therefore, in this case, the image display apparatus 50 selects an image captured by the camera 202 as an appearance prediction image.

In step S26, the image display apparatus 50 predicts in which range on an image capturing screen of the camera 202 the monitor target P1 appears when the camera 202 has image-captured the monitor target P1.

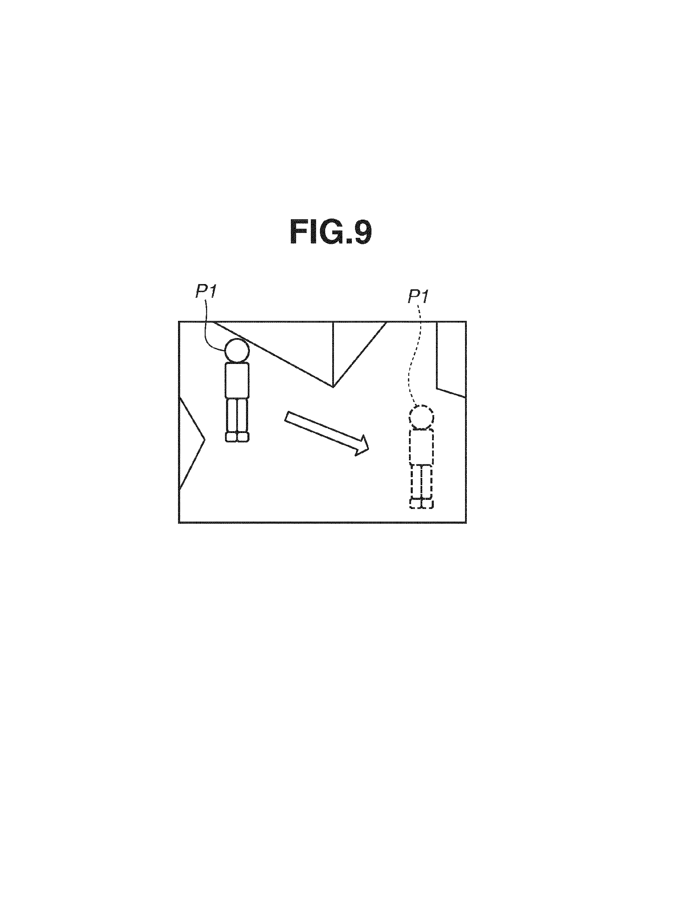

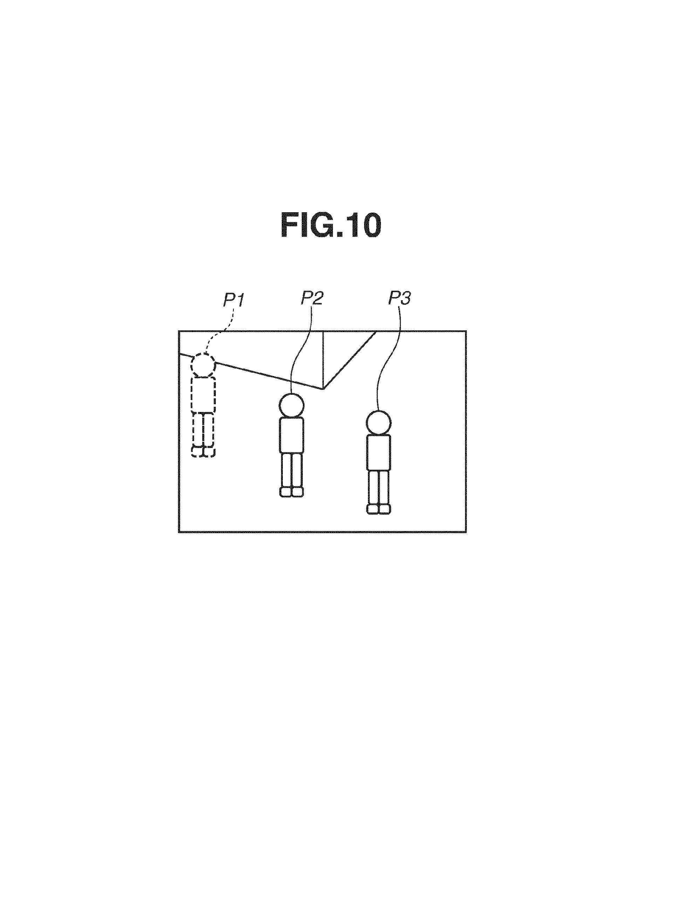

As illustrated in Fig. 7, when the monitor target P1 moves toward the image capturing range 212 of the camera 202 from the image capturing range 211 of the camera 201, the monitor target P1 moves in a direction indicated by an arrow in Fig. 9 on an image capturing screen of the camera 201. When the monitor target P1 enters the image capturing range 212 of the camera 202 and the camera 202 image-captures the monitor target P1, the monitor target P1 appears at a position indicated by a broken line in Fig. 10 on the image capturing screen of the camera 202.

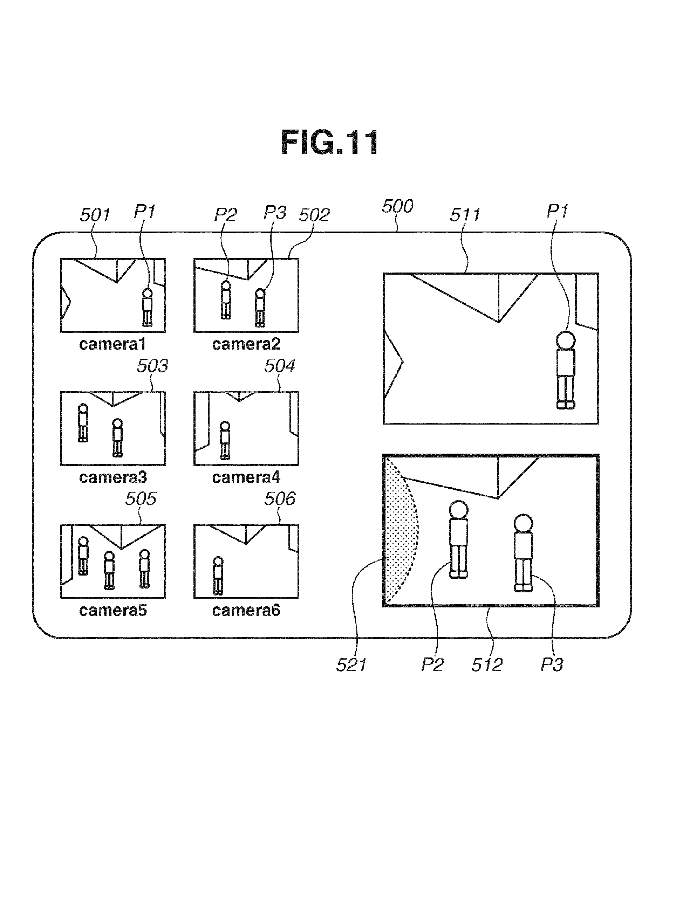

The image display apparatus 50 predicts that the monitor target P1 appears at the position indicated by the broken line in Fig. 10 on the image capturing screen of the camera 202 when the camera 202 image-captures the monitor target P1 based on the movement pattern data of the monitor target P1 that has been transmitted by the camera 201. In step S27, the image display apparatus 50 displays the appearance prediction image of the monitor target P1, i.e., the image captured by the camera 202, together with the appearance prediction range of the monitor target P1. An example of the output screen of the display 155 in the image display apparatus 50 at this time is illustrated in Fig. 11.

Thus, the image display apparatus 50 displays the image captured by the camera 202 in the area 512 in the output screen 500. More specifically, the image display apparatus 50 enlarges the appearance prediction image of the monitor target P1 to highlight the appearance prediction image. The image display apparatus 50 also highlights an appearance prediction range 521 of the monitor target P1.

If the respective images from all the cameras 201 to 206 are previously displayed, as illustrated in Fig. 11, the appearance prediction image may be highlighted using a method for flashing or explicitly indicating by an arrow a frame of a portion where the appearance prediction image is displayed. Thus, a monitoring person can easily recognize which of the cameras has captured an image enlarged as an appearance prediction image. If a method for highlighting the appearance prediction image during multi-screen display is used, as described above, the appearance prediction image need not be enlarged.

When the monitor target P1 passes through the image capturing range 211 of the camera 201 to enter the image capturing range 212 of the camera 202, the camera 202 image-captures the monitor target P1. Therefore, in this case, the camera 202 tracks the monitor target P1 and detects the movement pattern of the monitor target P1. The camera 203 image-captures the monitor target P1 subsequently to the camera 202.

In this case, the image display apparatus 50 selects the image captured by the camera 202 as a tracking image of the monitor target P1, and selects an image captured by the camera 203 as an appearance prediction image based on movement pattern data of the monitor target P1, which has been transmitted by the camera 202. Accordingly, the image display apparatus 50 switches the display of the tracking image in the area 511 illustrated in Fig. 11 into display of the image captured by the camera 202 while switching the display of the appearance prediction image in the area 512 into display of the image captured by the camera 203.

A similar operation is repeated until the monitor target P1 passes through the image capturing range 216 of the camera 206.

Images captured by the plurality of cameras may be probabilistically selected, respectively, as appearance prediction images depending on the movement pattern of the monitor target P1. In this case, a plurality of appearance prediction images serving as candidates may be selected and enlarged.

While the number of monitor targets is one in the above described example, the present invention is also applicable to a case where the number of monitor targets is plural. In this case, the tracking image and the appearance prediction image may be displayed for each of the monitor targets.

As described above, in the present exemplary embodiment, in an environment where a plurality of cameras is installed in a monitoring target space, based on image data from one of the cameras (a first camera) which image-captures a monitor target, a second camera which image-captures the monitor target subsequently to the first camera is predicted, and an image captured by the predicted second camera is highlighted. When the second camera is predicted, the monitor target is first detected from each of the images respectively captured by the plurality of cameras. Then, movement information for specifying a direction in which the monitor target is to move. The second camera is predicted based on the detected movement information and information representing image capturing ranges of the plurality of cameras, and the image captured by the predicted second camera is highlighted.

Therefore, when a monitoring person monitors the images captured by the plurality of cameras using a monitor in a security guardroom, the monitoring person can easily recognize the camera on which a monitor target is to be then reflected, and can easily track the monitor target by the image.

The monitor target is predicted to appear. Thus, the monitor target can be more easily and appropriately tracked by an image than when an image captured by the camera arranged in the vicinity of the current position of the monitor target (the camera arranged adjacent to the camera that is capturing the monitor target) is merely displayed.

At this time, a direction in which the monitor target is to move is specified from a combination of information respectively representing a movement direction, a movement locus, and a movement speed of the monitor target. Thus, a camera which image-captures the monitor target can be then predicted with high accuracy.

A method for displaying the above described predicted result can include a method for highlighting the image captured by the second camera. Thus, the monitoring person can check an image captured by the camera on which the monitor target is subsequently to be reflected, before the monitor target is reflected. At this time, if the image captured by the second camera is displayed (enlarged) to be larger than the image displayed in a multi-screen, an appearance prediction image of the monitor target can be easily checked.

In the multi-screen display, if the image captured by the second camera is displayed by being given a visual effect (a screen frame flash and an arrow display) different from that of the other images, the monitoring person can easily recognize which of the cameras has captured the image selected as the appearance prediction image.

Further, an appearance prediction range of the monitor target within the image captured by the second camera when the second camera image-captures the monitor target can also be specified based on information representing the direction in which the monitor target is to move and information representing the image capturing range of the second camera. In this case, when the appearance prediction image is displayed, information representing the appearance prediction range of the monitor target in the appearance prediction image may be superimposed on the appearance prediction image. Thus, the monitoring person can be made aware in advance in which part of the appearance prediction image the monitor target appears, and can easily recognize the monitor target when the monitor target has appeared in the appearance prediction image.

A second exemplary embodiment of the present invention will now be described.

The second exemplary embodiment uses a camera provided with a pan tilt zoom control function.

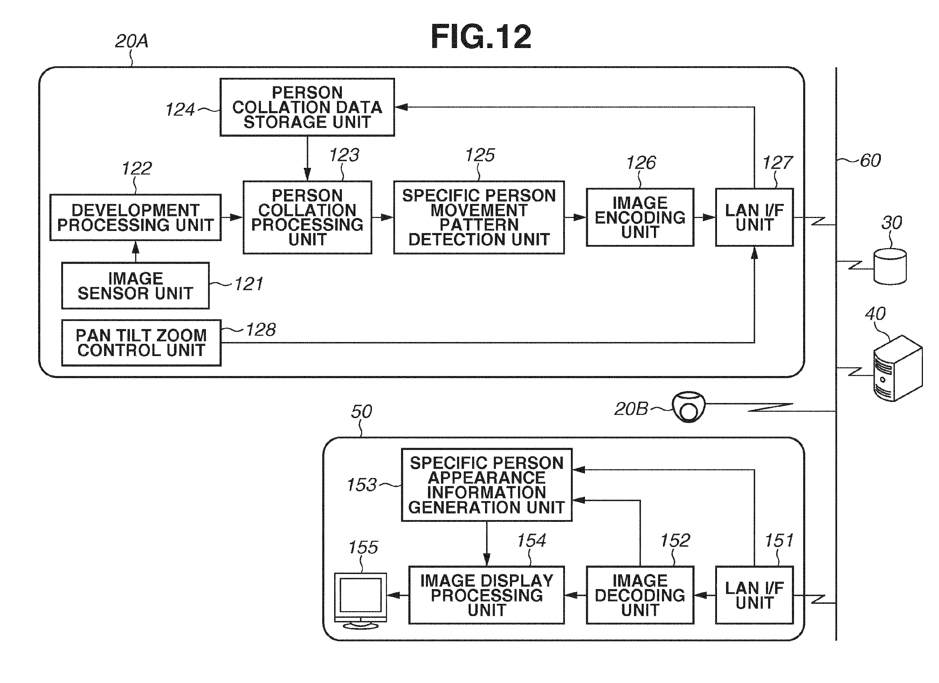

More specifically, each of cameras 20A and 20B illustrated in Fig. 1 includes a pan tilt zoom control unit 128 as illustrated in Fig. 12. In Fig. 12, units having the same configurations as those illustrated in Fig. 4 are assigned the same reference numerals. Units, which differ in configuration from those illustrated in Fig. 4, will be mainly described.

The pan tilt zoom control unit 128 outputs control commands to control a pan mechanism, a tilt mechanism, and a zoom mechanism of the camera 20A, respectively, to units for driving the mechanisms, and controls an image capturing direction, an image capturing range, and an image capturing viewing angle of the camera 20A.

The pan tilt zoom control unit 128 transmits changed image capturing azimuth angle data to a management server apparatus 40 via a LAN I/F unit 127.

An image display apparatus 50 acquires the image capturing azimuth angle data, which has been transmitted from each of the cameras via a LAN I/F unit 151, from the management server unit 40. The acquired image capturing azimuth angle data is sent to a specific person appearance information generation unit 153, and is used to generate specific person appearance information.

The specific person appearance information is generated based on movement pattern data of a monitor target by referring to a camera map, an installation position (installation coordinates) of each of the cameras, and camera information previously stored, as described above. The specific person appearance information generation unit 153 updates the image capturing direction, range, and viewing angle of each of the cameras previously stored based on the acquired image capturing azimuth angle data, and generates the specific person appearance information.

In the foregoing, the pan tilt zoom control unit 128 corresponds to a driving control unit.

An operation according to the second exemplary embodiment will be described.

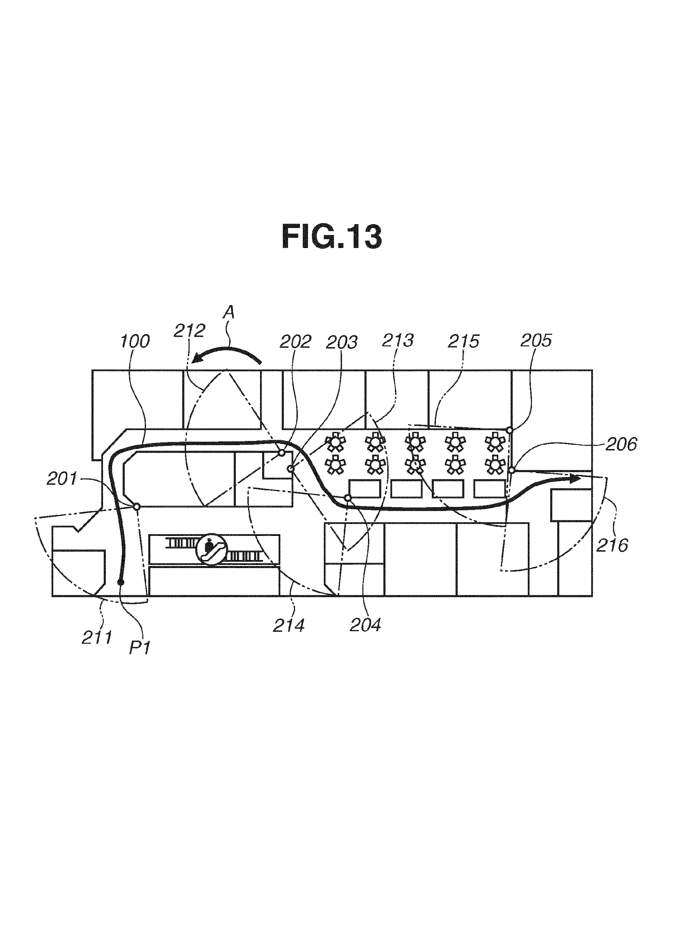

A case where a monitor target P1 passes through a monitoring target range illustrated in Fig. 13 along a movement locus indicated by an arrow 100 will be described below. In

Fig. 13, cameras 201 to 206 have the same configuration as that of the above described cameras 20A and 20B. In Fig. 13, the camera 201 image-captures a subject within its image capturing range 211, and the camera 202 image-captures a subject within its image capturing range 212. The same is true for the cameras 203 to 206.

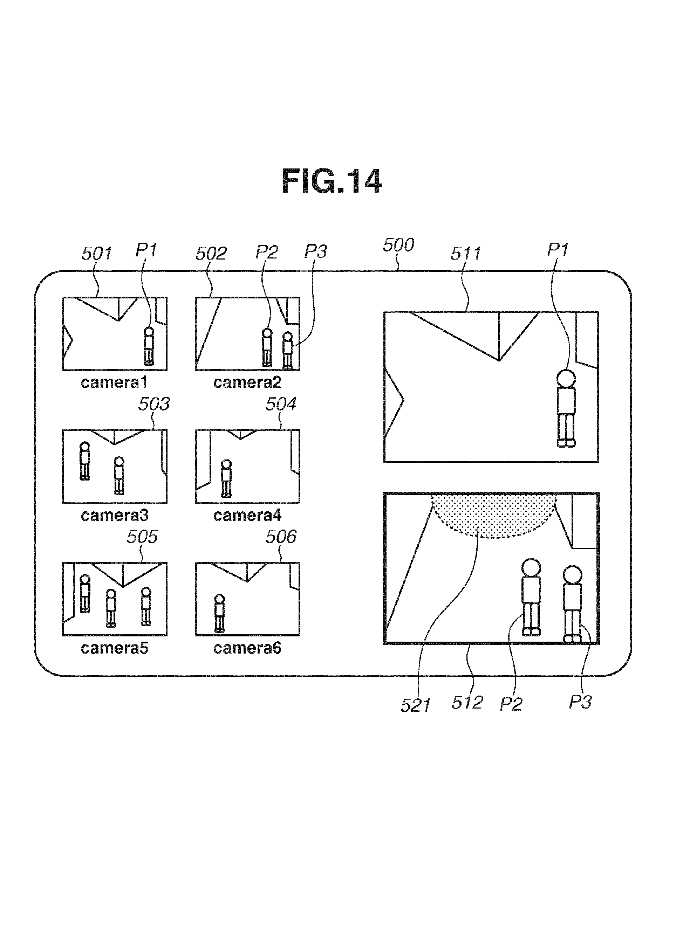

Each of the cameras 201 to 206 has a pan tilt zoom control function. When the monitor target P1 moves toward the image capturing range 212 of the camera 202 from the image capturing range 211 of the camera 201, the image capturing range 212 of the camera 202 changes as indicated by an arrow A in Fig. 13. In this case, the image display apparatus 50 acquires image capturing azimuth angle data which has been transmitted from the camera 202, and finds the image capturing range 212 after the change of the camera 202 based on the acquired image capturing azimuth angle data. The image display apparatus 50 specifies an appearance prediction range of the monitor target P1 based on information representing the image capturing range 212 after the change, and superimposes the specified appearance prediction range on an appearance prediction image when displaying the appearance prediction image. An output screen at this time is illustrated in Fig. 14.

An appearance prediction range 521 is a left part of an appearance prediction image, as illustrated in Fig. 11, when specified based on an image capturing range in an initial state of the camera 202, and is updated to an upper part of the appearance prediction range as illustrated in Fig. 14, when specified based on a newly acquired image capturing range. Thus, an accurate appearance prediction range can be displayed.

As described above, if each of the cameras has at least one of the pan mechanism, the tilt mechanism, and the zoom mechanism, an image capturing range of the second camera, which image-captures a monitor target subsequently to the first camera being image-capturing the monitor target, can be grasped based on a control command to control driving of each of the functions. Therefore, when an appearance prediction range of the monitor target in an appearance prediction image is specified based on the information, appearance prediction of the monitor target can be appropriately performed in also an environment where the image capturing range of each of the cameras can change by the above described mechanisms.

In each of the above described exemplary embodiments, after the image display apparatus 50 displays the appearance prediction image, right or wrong determination whether the displayed appearance prediction image is correct can be input from a user. In this case, the image display apparatus 50 may include a right or wrong information acquisition unit that acquires information representing the right or wrong determination (right or wrong information) input by the user, and may be assigned a learning function of changing weighting of each of the movement direction, the movement locus, and the movement speed used to detect the movement pattern of the monitor target based on the acquired right or wrong information. Thus, more appropriate appearance prediction can be made.

In each of the above described exemplary embodiments, the image display apparatus 50 may include an implementation determination unit that determines whether appearance prediction is performed depending on a monitoring target (e.g., a feature amount of a person). In this case, a person having a first feature amount makes appearance prediction in the respective image capturing ranges of the cameras 201 to 204 illustrated in Fig. 7, a person having a second feature amount makes appearance prediction in the image capturing ranges of all the cameras 201 to 206, and a person having a third feature amount does not make appearance prediction, for example. Setting information for performing such implementation determination may be included in person collation data managed by the management server apparatus 40.

While a case where the person collation processing and the movement pattern detection processing are performed on the side of the camera (image capturing apparatus) has been described in each of the above described exemplary embodiments, the management server apparatus 40 or the image display apparatus 50 may perform the person collation processing and the movement pattern detection processing. The person collation processing for detecting the monitor target may be performed by the user, for example. More specifically, the image display apparatus 50 may display an image captured by each of the cameras, and the user who has checked the images may select a monitor target on a display screen (by a screen touch or a mouse operation).

Further, in each of the above described exemplary embodiments, the image display apparatus 50 may perform processing to be performed by the management server apparatus 40 (management of the person collation data and management over an entire monitoring target range). While a case where the image data file from each of the cameras is stored in the storage apparatus 30 has been described, the image data file may be stored by each of the cameras, or may be stored by the image display apparatus 50.

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment (s) and/or that includes one or more circuits (e.g., application specific integrated circuit (ASIC)) for performing the functions of one or more of the above-described embodiment (s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions maybe provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments.

## Claims

1. An image processing apparatus comprising:
detection means for detecting movement information for specifying a movement direction of a specific moving object detected from an image obtained by at least one of a plurality of image capturing means;
prediction means for predicting second image capturing means for image-capturing the specific moving object subsequently to first image capturing means based on the movement information detected by the detection means and information representing an image capturing range of each of the plurality of image capturing means; and
display control means for performing display for specifying a prediction result by the prediction means before the second image capturing means image-captures the specific moving object.

2. The image processing apparatus according to claim 1, wherein the detection means further detects information representing a movement speed of the specific moving object as the movement information.

3. The image processing apparatus according to claim 1, wherein the display control means highlights an image captured by the second image capturing means before the second image capturing means image-captures the specific moving object.

4. The image processing apparatus according to claim 1, wherein the display control means causes multi-screen display means for enabling split-display of a plurality of images respectively captured by the plurality of image capturing means in one screen to display the plurality of images, and
wherein the display control means performs display control for displaying an image captured by the second image capturing means to be larger than the plurality of images split-displayed by the multi-screen display means before the second image capturing means image-captures the specific moving object.

5. The image processing apparatus according to claim 3, wherein the display control means causes multi-screen display means for enabling split-display of a plurality of images respectively captured by the plurality of image capturing means in one screen to display the plurality of images, and
wherein the display control means displays the image captured by the second image capturing means among the plurality of images split-displayed by the multi-screen display means after giving a different visual effect from that given to the images captured by the other image capturing means to the image.

6. The image processing apparatus according to claim 1, further comprising specifying means for specifying an appearance prediction range in which the specific moving object is predicted to appear in the image capturing range of the second image capturing means based on the movement information detected by the detection means and the information representing the image capturing range of the second image capturing means,
wherein the display control means displays an image captured by the second image capturing means after superimposing information representing the appearance prediction range specified by the specifying means on the image before the second image capturing means image-captures the specific moving object.

7. The image processing apparatus according to claim 6, further comprising driving control means for outputting a control command to control driving of at least one of a pan mechanism, a tilt mechanism, and a zoom mechanism of one or more of the plurality of image capturing means,
wherein the specifying means detects the image capturing range of the second image capturing means based on the control command output by the driving control means, and uses the detected image capturing range to specify the appearance prediction range.

8. The image processing apparatus according to claim 1, further comprising right or wrong information acquisition means for acquiring right or wrong information about a prediction result by the prediction means,
wherein the prediction means changes weighting of the plurality of movement information detected by the detection means based on the right or wrong information acquired by the right or wrong information acquisition means and predicts the second image capturing means.

9. The image processing apparatus according to claim 1, further comprising determination means for determining whether the prediction means performs processing for predicting the second image capturing means depending on a feature amount of the specific moving object detected by the detection means.

10. An image processing method, comprising:
detecting movement information for specifying a movement direction of a specific moving object detected from an image obtained by at least one of a plurality of image capturing means;
predicting second image capturing means for image-capturing the specific moving object subsequently to the first image capturing means based on the detected movement information and information representing an image capturing range of each of the plurality of image capturing means; and
performing display control for specifying a prediction result before the second image capturing means image-captures the specific moving object.

11. The image processing method according to claim 10, wherein performing the display control includes highlighting an image captured by the second image capturing means before the second image capturing means image-captures the specific moving object.

12. The image processing method according to claim 10, wherein performing the display control includes causing multi-screen display means for enabling split-display of a plurality of images respectively captured by the plurality of image capturing means in one screen to display the plurality of images, and
performing the display control includes performing display control for displaying an image captured by the second image capturing means to be larger than the plurality of images split-displayed by the multi-screen display means before the second image capturing means image-captures the specific moving object.

13. A program which, when executed, causes an image processing apparatus to perform the method of any one of claims 10 to 12.

14. A storage medium storing a program according to claim 13.
